# EUROPÄISCHE PATENTSCHRIFT

(11) **EP 2 300 361 B1**
(45) Veröffentlichungstag und Bekanntmachung des Hinweises auf die Patenterteilung: **26.09.2012**
(21) Anmeldenummer: 09772075.9
(22) Anmeldetag: 10.06.2009
(51) Int. Cl.: C01B 3/38, C01B 3/50, B01D 53/22, B01J 19/24

(54) **VORRICHTUNG ZUR ERZEUGUNG VON WASSERSTOFF**
DEVICE FOR GENERATING HYDROGEN
DISPOSITIF POUR LA PRODUCTION D'HYDROGÈNE

(30) Priorität: 01.07.2008 DE 102008031092
(43) Veröffentlichungstag der Anmeldung: 30.03.2011
(73) Patentinhaber: Linde AG, 80331 München (DE)
(72) Erfinder: HOFMANN, Karl, Heinz, 82110 Germering (DE); SCHÖDEL, Nicole, 81477 München (DE); KLAPPER, Klaus, 82049 Pullach (DE); BEHRENS, Axel, 80689 München (DE); DITTMEYER, Roland, 61440 Oberursel (DE)
(86) Internationale Anmeldenummer: PCT/EP2009/004189
(87) Internationale Veröffentlichungsnummer: WO 2010/000375

(56) Entgegenhaltungen:
- WO-A-2007/031713
- WO-A-2007/111278
- J.R. LATTNER ET AL: "Comparison of conventional and membrane reactor fuel processors for hydrocarbon-based PEM fuel cell systems" INTERNATIONAL JOURNAL OF HYDROGEN ENERGY, ELSEVIER SCIENCE PUBLISHERS B.V., BARKING, GB, Bd. 29, Nr. 4, 1. März 2004 (2004-03-01), Seiten 393-417, XP004488770 ISSN: 0360-3199

## Beschreibung

Die Erfindung betrifft eine Vorrichtung zur Erzeugung von Wasserstoff; aufweisen, einen von einem Rohr umschlossenen Reaktionsraum, in ein aus Wasserdampf und einem Kohlenstoff enthaltenden Einsatz bestehendes Stoffgemisch durch Dampfreformierung umsetzbar ist, sowie eine zumindest abschnittsweise selektiv wasserstoffdurchlässige Trennwand, über bei der Dampfreformierung erzeugter Wasserstoff kontinuierlich mit einem Druck; der kleiner ist als der Druck im Reaktionsraum und gröβer als der Umgebungsdruck mit hoher Reinheit aus dem Reaktionsraum abziehbar ist, wobei die selektiv wasserstoffdurchlässigen Abschnitte der Trennwand so angeordnet sind, dass jeweils über der Gesamtfläche eines derartigen Abschnittes zwischen dem Reaktionsraum und der Wasserstoffabzugsseite ein Wasserstoffpartialdruckgefälle besteht, dadurch gekennzeichnet, dass die Trennwand aus einer Vielzahl von unterschiedlich langen Trennrohren besteht, die zu einem Modul gebündett sind.

Die Dampfreformierung ist ein seit vielen Jahren bekannter Prozess, bei dem vor allem kurzkettige Kohlenwasserstoffe, wie beispielsweise Methan (CH₄) oder Naphtha, gemeinsam mit Wasserdampf katalytisch unterstützt in einem Reaktionsraum zu Kohlenoxiden und Wasserstoff umgesetzt werden. Die Temperaturen im Reaktionsraum liegen typischer Weise zwischen 800 und 950°C, während der Druck 20 bis 40 bar beträgt. Im Wesentlichen laufen bei der Dampfreformierung eine Reformierungs- und eine Shiftreaktion nach den folgenden Reaktionsgleichungen ab:

CₙHₘ + nH₂O ⇔ nCO + (m/2+2n)H₂ (1)

CO + H₂O ⇔ CO₂+H₂O (2)

Für gewöhnlich ist der Reaktionsraum in einem beheizbaren Reaktorrohr angeordnet, dem von außen die für den insgesamt stark endothermen Reformierungsvorgang benötigte Energie zugeführt wird. An einem Ende werden in das Reaktorrohr die Edukte (kohlenstoffhaltiger Einsatz und Wasserdampf) eingeleitet, während an seinem anderen Ende ein Wasserstoff enthaltendes Produktgas abgezogen wird, das zu einem beträchtlichen Teil aus nicht oder nicht vollständig umgesetzten Edukten besteht. Im Falle von Methan bedeutet dies beispielsweise, dass ca. 20-40% des Edukt-Methans im Produktgas enthalten sind. Üblicherweise schließt sich daher an eine Dampfreformierung ein weiterer Verfahrensschritt an, in dem nicht umgesetztes Methan durch Reformierung oder Partialoxidation bis auf Restgehalte von weniger als 1% in Wasserstoff und Kohlenmonoxid umgewandelt wird. Ist die Gewinnung eines Wasserstoffproduktes das eigentliche Ziel des Verfahrens, so folgt den Reformierungsschritten eine Wassergas-Shift, in der Kohlenmonoxid mit Wasser zu Wasserstoff und Kohlendioxid umgewandelt wird. Der Produktwasserstoff muss anschließend aus dem in der Wassergas-Shift erzeugten Gasgemisch durch aufwendige Verfahrensschritte abgetrennt werden.

Um die Nachteile dieses Standes der Technik zu überwinden, werden in den Patentanmeldungen EP0167101 und WO2007/031713 Verfahren sowie Vorrichtungen angegeben, mit denen es möglich ist, den Kohlenstoff enthaltenden Einsatz durch Dampfreformierung effektiver umzusetzen und Produktwasserstoff mit höherer Ausbeute und in weniger Verfahrenschritten zu gewinnen. Bei dem beschriebenen Verfahren wird bei der Dampfreformierung gebildeter Wasserstoff kontinuierlich über eine selektiv wasserstoffdurchlässige Trennwand aus dem Reaktionsraum in einen Wasserstoffabzugsraum abgezogen und mit hoher Reinheit weiter geführt. Das Abziehen des Wasserstoffs aus dem Reaktionsraum ist mit einer Gleichgewichtsverschiebung, der bei der Dampfreformierung ablaufenden Reaktionen (1) und (2) auf die Seite der Produkte verbunden. Dies bewirkt eine höhere Wasserstoffausbeute bei gleichzeitiger Verminderung der Kohlenmonoxidbildung. EP0167101 und WO2007/031713 geben jeweils, ein Reaktorrohr zur Durchführung des beschriebenen Verfahrens an, bei dem die selektiv wasserstoffdurchlässige Trennwand in Form eines Rohres bzw. einer Vielzahl von Rohren im Reaktionsraum angeordnet ist, wobei sich die Länge des Rohres bzw. der Rohre über die gesamte Länge des Reaktionsraumes erstreckt. Das Innere des bzw. der Rohre bildet den Wasserstoffabzugsraum.

Die Patentanmeldung WO2007/111278 offenbart einen Reaktor zur Erzeugung von Wasserstoff, aufweisend einen rohrförmigen Reaktionsraum, in dem ein aus Wasserdampf und einem Kohlenstoff enthaltenden Einsatz bestehendes Stoffgemisch durch Dampfreformierung umsetzbar ist, sowie eine wasserstoffdurchlässige Trennwand, über die bei der Dampfreförmierung erzeugter Wasserstoff kontinuierlich aus dem Reaktionsraum abziehbar ist. Die Trennwand ist als Rohr ausgebildet, das sich lediglich über einen Teil der Länge des Reaktionsraumes erstreckt.

Die treibende Kraft zum Abziehen des Wasserstoffs aus dem Reaktionsraum ist die zwischen Reaktionsraum und Wasserstoffabzugsraum herrschende Wasserstoffpartialdruckdifferenz. Während der Wasserstoffpartialdruck im Reaktionsraum von der Eintrittsseite der Edukte aus von Null beginnend ansteigt, ist er im gesamten Wasserstoffabzugsraum weitgehend konstant. In den Bereichen des Reaktorrohres, in denen der Wasserstoffpartialdruck im Reaktionsraum kleiner ist als im Wasserstoffabzugsraum, diffundiert ein Teil des an anderer Stelle abgezogenen Wasserstoffs zurück in den Reaktionsraum. Dieser als Rückdiffusion bezeichnete Effekt führt zu einer Verschlechterung der Wasserstoffausbeute.

Um Wasserstoff ohne Rückdiffusion aus dem Reaktionsraum abziehen zu können, wird nach dem Stand der Technik die Trennwand auf Seiten des Wasserstoffabzugsraumes mit einem Gas (z. B. Wasserdampf oder Stickstoff) gespült oder der Wasserstoff wird mit Unterdruck abgezogen. Beide Methoden sind mit Nachteilen verbunden, da im ersten Fall der Wasserstoff durch die Spülgase verunreinigt wird und im zweiten Fall der Wasserstoff auf den gewünschten Produktdruck, der i. Allg. deutlich über dem Umgebungsdruck liegt, verdichtet werden muss.

In einer *Veröffentlichung (*James R. Lattner, Michael P. Harold, Comparison of conventional and membrane reactor fuel processors for hydrogen-based PEM fuel cell systems", INTERNATIONAL JOURNAL OF HYDROGEN ENERGY, ELSEVIER, GB, Bd. 29, Nr.4, Seiten 392-417, ISSN: 0360-3199) wird ein Reaktor zur Erzeugung von Wasserstoff offenbart, der einen von einem Rohr umschlossenen Reaktionsraum sowie eine selektiv wasserstoffdurchlässige Trennwand aufweist, über die der erzeugte Wasserstoffs kontinuierlich mit hoher Reinheit abziehbar ist. Die aus Membranrohren gleicher Länge gebildete Trennwand ist so angeordnet, dass über ihre Gesamtfläche ein Wasserstoffpartialdruckgefälle zwischen Reaktionsraumseite und Wasserstoffabzugsseite besteht.

Der vorliegenden Erfindung liegt daher die Aufgabe zugrunde, eine Vorrichtung der eingangs beschriebenen Art anzugeben, durch welche die Nachteile des Standes der Technik überwunden werden können.

Die gestellte Aufgabe wird erfindungsgemäß dadurch gelöst, dass die Trennwand aus einer Vielzahl von unterschiedlich langen Trennrohren besteht, die zu einem Modul (Trennmodul) gebündelt sind.

Unter einem Trennrohr ist dabei eine als Rohr ausgebildete Trennwand zu verstehen, , wobei die Rohraußenseite dem Reaktionsraum zugewandt ist. Die Trennrohrinnenseite bildet einen Raum (Wasserstoffabzugsraum) über den der aus dem Reaktionsraum abgezogene Wasserstoff aus dem Reaktorrohr abführbar ist. Vorzugsweise ist ein Trennmodul zentral im Reaktionsrohr angeordnet.

Die für die Wasserstoffabtrennung günstigen Bedingungen (z.B. der Wasserstoffpartialdruck) variieren über die Länge, aber auch über den Radius des Reaktionsraumes, weswegen es zweckmäßig sein kann, ein Trennmodul aus unterschiedlich langen Trennrohren aufzubauen, wobei beispielsweise weiter innen Trennrohre in geringerer Anzahl und mit größeren Längen angeordnet sind, als weiter außen. Durch einen derartigen Aufbau eines Trennmoduls wird erreicht, dass teure Membranfläche nur dort angeordnet ist, wo sie die größte Wirkung erzielen kann.

Die Erfindung weiterbildend, wird vorgeschlagen, dass ein Trennrohr bzw. ein Trennmodul im eduktseitigen Bereich des Reaktorrohres, in dem der Wasserstoffpartialdruck im Reaktionsraum kleiner ist als im Wasserstoffabzugsraum, wasserstoffundurchlässig ausgeführt ist oder dass ein Trennrohr bzw. ein Trennmodul erst an einer Stelle des Reaktionsraumes beginnen, an der der Wasserstoffpartialdruck im Reaktionsraum größer ist als im Wasserstoffabzugsraum.

Die selektiv wasserstoffdurchlässigen Abschnitte der Trennwand können mit einer Vielzahl von homogenen oder porösen Materialien realisiert werden, die bei den für die Dampfreformierung erforderlichen Temperaturen Wasserstoff ausreichend gut passieren lassen. Diese Anforderungen werden hervorragend von Membranen aus Palladium und Palladiumlegierungen, wie z.B. Palladium-Gold- oder Palladium-SilberLegierungen, erfüllt. Besonders bevorzugte Varianten der erfindungsgemäßen Vorrichtung sehen daher vor, dass die selektiv wasserstoffdurchlässigen Abschnitte der Trennwand eine Membran aufweisen, die vorzugsweise aus Palladium oder einer Palladium-Gold- oder Palladium-Silber-Legierung besteht.

Da für den Einsatz in der erfindungsgemäßen Vorrichtung geeignete selektiv wasserstoffdurchlässigen Membranen sehr teuer sind und daher einen großen Teil der Investitionskosten verursachen, ist es sinnvoll, die Gesamtfläche der selektiv wasserstoffdurchlässigen Abschnitte der Wasserstofferzeugung zu minimieren, beispielsweise im Hinblick auf größtmögliche Wirtschaftlichkeit. Die für die Wasserstoffabtrennung günstigen Bedingungen (z. B. der Wasserstoffpartialdruck) variieren über die Länge, aber auch über den Radius des Reaktionsraumes, weswegen es zweckmäßig sein kann, ein Trennmodul aus unterschiedlich langen Trennrohren aufzubauen, wobei beispielsweise weiter innen Trennrohre in geringerer Anzahl und mit größeren Längen angeordnet sind, als weiter außen. Durch einen derartigen Aufbau eines Trennmoduls wird erreicht, dass teure Membranfläche nur dort angeordnet ist, wo sie die größte Wirkung erzielen kann.

Die selektiv wasserstoffdurchlässigen Membranen besitzen nur eine geringe mechanische Stabilität. Damit die Membranen, die im Betrieb auftretenden Beanspruchungen dauerhaft ertragen können, sieht die Erfindung vor, dass sie auf einer ausreichend widerstandsfähigen, wasserstoffdurchlässigen Stützstruktur aufliegen, die vorzugsweise aus einem Sintermetall besteht.

Um die Diffusion von Metallionen aus der Stützstruktur in die wasserstoffdurchlässige Membran zu verhindern, ist zwischen der Stützstruktur und der wasserstoffdurchlässige Membran eine oxidische Zwischenschicht angeordnet, die als Diffusionssperre für Metallionen wirkt.

Die Erfindung ermöglicht es, hochreinen Wasserstoff mit CO-Gehalten von weniger als 1% und mit einem deutlich über dem Umgebungsdruck liegenden Druck dem Reaktorrohr abzuziehen. Nachfolgende Behandlungsschritte, wie Sekundärreformierung und Wassergas-Shift sind daher nicht notwendig. Außerdem können Wasserstoffabtrennschritte und/oder eine Wasserstoffverdichtung entfallen. Durch den Verzicht auf teure wasserstoffdurchlässige Membranen in Bereichen des Reaktionsraumes, in denen Rückdiffusion von Wasserstoff auftritt, ergeben sich geringere Investitionskosten.

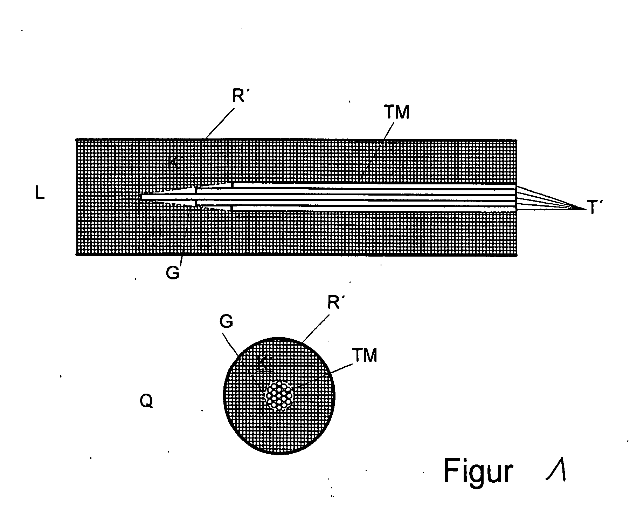

Im Folgenden soll die Erfindung anhand eines in der Figure 1 schematisch dargestellten Ausführungsbeispieles näher erläutert werden.

Figur 1 zeigt einen Längsschnitt L und einen Querschnitt Q durch ein Reaktorrohr R', in dem ein aus mehreren Trennrohren T' gebildetes Trennmodul TM angeordnet ist. Die Anzahl der auf einem Umfang angeordneten Trennrohre T' wächst mit dem Abstand zur Achse des Reaktorrohrs R', während ihre Länge abnimmt. Durch diese Art der Trennrohranordnung kann die Fläche der selektiv wasserstoffdurchlässigen Membran den im Reaktorrohr R' auftretenden Bedingungen leicht angepasst werden. Obwohl des Trennmodul TM aufgrund seiner Form bereits eine hohe mechanische Stabilität aufweist, ist es zusätzlich mit einem Gitter G umgeben, durch das ein direkter Kontakt der selektiv wasserstoffdurchlässigen Membran mit der Katalysatorschüttung K' weitgehend vermieden wird. In Abhängigkeit von den Parametern und Randbedingungen der Dampfreformierung können auch andere Anordnungen der Trennrohre T' sinnvoll sein.

## Patentansprüche

1. Vorrichtung zur Erzeugung von Wasserstoff, aufweisend einen von einem Rohr umschlossenen Reaktionsraum, in dem ein aus Wasserdampf und einem Kohlenstoff enthaltenden Einsatz bestehendes Stoffgemisch durch Dampfreformierung umsetzbar ist sowie eine zumindest abschnittsweise selektiv wasserstoffdurchlässige Trennwand, über die bei der Dampfreformierung erzeugter Wasserstoff kontinuierlich mit einem Druck, der kleiner ist als der Druck im Reaktionsraum und größer als der Umgebungsdruck, mit hoher Reinheit aus dem Reaktionsraum abziehbar ist, wobei die selektiv wasserstoffdurchlässigen Abschnitte der Trennwand so angeordnet sind, dass jeweils über der Gesamtfläche eines derartigen Abschnittes zwischen dem Reaktionsraum und der Wasserstoffabzugsseite ein Wasserstoffpartialdruckgefälle besteht, **dadurch gekennzeichnet, dass** die Trennwand aus einer Vielzahl von unterschiedlich langen Trennrohren besteht, die zu einem Modul gebündelt sind.

## Claims

1. Device for generating hydrogen, comprising a reaction chamber enclosed by a tube in which reaction chamber a mixture of matter consisting of steam and a carbonaceous feed can be reacted by steam reforming, and a dividing wall that is selectively hydrogen-permeable at least in sections, via which hydrogen generated in the steam reforming can be continuously drawn off from the reaction chamber at high purity at a pressure which is less than the pressure in the reaction chamber and greater than the ambient pressure, wherein the selectively hydrogen-permeable sections of the dividing wall are arranged in such a manner that in each case a hydrogen partial pressure drop exists over the total area of such a section between the reaction chamber and the hydrogen draw-off side, **characterized in that** the dividing wall consists of a multiplicity of dividing tubes of different lengths that are bundled to form a module.

## Revendications

1. Dispositif pour la production d'hydrogène, présentant une chambre de réaction entourée par un tube, dans laquelle un mélange de substances constitué de vapeur d'eau et d'une charge contenant de l'oxygène peut être réalisé, par reformage à la vapeur, ainsi qu'une paroi de séparation au moins en partie perméable de manière sélective à l'hydrogène, par le biais de laquelle l'hydrogène produit lors du reformage à la vapeur peut être soutiré en continu avec une grande pureté à partir de la chambre de réaction, à une pression qui est inférieure à la pression dans la chambre de réaction et supérieure à la pression atmosphérique, les portions perméables de manière sélective à l'hydrogène de la paroi de séparation étant disposées de telle sorte qu'il existe à chaque fois un gradient de pression partiel d'hydrogène sur la surface totale d'une telle portion entre la chambre de réaction et le côté d'extraction de l'hydrogène, **caractérisé en ce que** la paroi de séparation se compose d'une pluralité de tubes de séparation de différentes longueurs qui sont mis en faisceau pour former un module.
